Europäisches Patentamt

European Patent Office

Office européen des brevets

(19)

(11) Veröffentlichungsnummer: **0 264 085 B1**

(12) **EUROPÄISCHE PATENTSCHRIFT**

(45) Veröffentlichungstag der Patentschrift: **15.01.92**

(21) Anmeldenummer: **87114818.5**

(22) Anmeldetag: **10.10.87**

(51) Int. Cl.⁵: **E04F 11/18**

(54) **Treppenhandlauf.**

(30) Priorität: **14.10.86 DE 3634901**

(43) Veröffentlichungstag der Anmeldung:
**20.04.88 Patentblatt 88/16**

(45) Bekanntmachung des Hinweises auf die
Patenterteilung:
**15.01.92 Patentblatt 92/03**

(84) Benannte Vertragsstaaten:
**AT BE CH DE ES FR GB GR IT LI LU NL SE**

(56) Entgegenhaltungen:
**AT-B- 336 244        DE-A- 2 555 041
DE-A- 3 049 527        DE-C- 629 063
DE-C- 3 403 900        GB-A- 2 147 022
US-A- 3 207 479        US-A- 4 408 749**

**TG TREPPEN + GELAENDER, Band 2, 1984,
Seiten 70,71; SCHWARZ:
"KABO-Massivholztreppen"**

(73) Patentinhaber: **NEUCON Maschinen- und Bau-
systeme G.m.b.H. u. Co. Kommanditgesell-
schaft
Albertistrasse 22
W-7100 Heilbronn(DE)**

(72) Erfinder: **Kenngott, Hans
Schollenhaldenstrasse 15
W-7100 Heilbronn-Böckingen(DE)**

(74) Vertreter: **Utermann, Gerd, Dipl.-Ing.
Kilianstrasse 7 (Kilianspassage) Postfach
3525
W-7100 Heilbronn(DE)**

EP 0 264 085 B1

**Beschreibung**

Die Erfindung betrifft einen Treppenhandlauf, der auf den oberen Enden von Geländerstäben mit im Winkel einstellbaren Befestigungselementen befestigt ist und in einzelne, mit unterschiedlicher Neigung und Winkellage verlaufende gerade Handlaufabschnitte unterteilt ist und wobei die Enden jedes Handlaufabschnittes vertikal verlaufende Endflächen aufweisen und im Bereich der jeweiligen vertikalen Endflächen mit Verbindungs- und Befestigungsmitteln befestigt sind.

Treppen benötigen Handläufe für die Sicherheit beim Begehen. Da Treppen mit unterschiedlichen Steigungen und unterschiedlichen Wendelungen ausgeführt werden, müssen die Handläufe, um sich den jeweiligen Erfordernissen anzupassen, entsprechend gestaltet werden. Es gibt viele Versuche für einfach montierbare, an die unterschiedlichen Neigungen und Abwinkelungen sowie Krümmungen anzupassende Handläufe. Diese können jedoch nur aus entspredhenden Materialien, wie Metallen, Kunststoffen, Seilen oder dgl., gebildet werden. Diese rufen beim Anfassen ein anderes Griffgefühl als Holz hervor. Viele Treppenbenutzer und Bauherren bevorzugen aus verschiedenen Gründen einen hölzernen Handlauf. Dieser vermittelt schon vom optischen Eindruck her ein Gefühl der Stabilität. Er hat ein entsprechendes Aussehen und vor allem vermittelt er das gewünschte Gefühl beim Anfassen. Holz für solche Zwecke kann mit wirtschaftlich vernünftigem Aufwand nur aus geraden Stücken bestehen. Demgemäß sind Handläufe für Treppen mit unterschiedlicher Neigung für Wendeltreppen und Spindeltreppen aus einzelnen geraden Stücken zusammenzusetzen. Wenn die Winkel der verschiedenen zusammenzufügenden Abschnitte des Handlaufes sehr genau bekannt sind, kann man sie werkseitig unter Umständen unter Zuhilfenahme von computergestützten Rechnungs- und Konstruktions- sowie Fertigungseinheiten zumindest teilweise vorfertigen. Die Praxis zeigt jedoch, daß gerade bei solchen Treppen, die den unvermeidlichen Toleranzen am Bau entsprechend angepaßt werden können, die Handläufe auch am Bau entsprechend zusammenzusetzen sind.

Wenn man innerhalb eines geradlinigen Laufteiles wegen unterschiedlicher Neigung eine Abknickung vorzunehmen hat, so läßt sich diese noch verhältnismäßig leicht durch einen sauberen Schnitt auf der Winkelhalbierenden realisieren. Jede Abknickung mit scharfer Ecke führt aber bei am Bau ausgeführten Schnitten unweigerlich zu Unsauberkeiten. Auch die für tragenden Wangen und/oder Handläufe bekannten Lösungen, beispielsweise nach GB-A-2 147 022, DE-GM 71 37 304 und DE-GM 75 39 028 = DE-OS 25 55 041, haben aufwendige handwerklich genau aufeinander abgestimmte Stöße und Fugen,die sehr sauber bearbeitet werden müssen.

Aus der herkömmlichen Treppenfertigung sind die im Treppenauge und am unteren und oberen Ende des jeweiligen Laufes senkrecht aufragende Handlaufstützen bekannt. Diese wurden zur Erzielung eines glatt durchgehenden Geländers mit im Profil passend angeschlossenen Handlauf-Abschnitten versehen, die entsprechend saubere handwerkliche Arbeit bedingen, welche mit wirtschaftlich vertretbarem Aufwand für Montagegeländer heute nicht mehr zur Verfügung steht.

Auch die Befestigung eines durchgehenden Handlaufes aus Holz oder Holzwerkstoffen auf unterschiedlich geneigten Laufabschnitten mit Schnellmontagestreben erfordert die individuelle Anpassung am Bau. Dabei ist es wichtig, daß auch nachträglich Korrekturen ohne sichtbare Spuren vorgenommen werden können.

Der Erfindung liegt die Aufgabe zugrunde, für einen Treppenhandlauf Verbindungen zu schaffen, die auch bei relativ unsauberem Schnitt und relativ ungenauer Montage ein sauberes Anschlußbild ergeben und die zudem weitestmöglich industriell vorgefertigt werden und an der Baustelle mit geringstem Aufwand zusammengefügt werden können.

Erfindungsgemäß ist vor allem vorgesehen, daß die Verbindungmittel in Stoßbereichen mit im Winkel zueinander stehenden, vertikal verlaufenden Anschlußseitenflächen versehene kurze Eckstücke, vorzugsweise aus Massivholz mit senkrecht laufender Faser, enthalten, welche etwas breiter als die Dicke des Handlaufs sind und eine Höhe aufweisen, die wenig höher als die längste Endfläche des steilsten der beiden angeschlossenen Handlaufabschnitte ist und wobei in die zwei im Winkel zueinander stehenden Anschlußseitenflächen der Eckstücke Vertiefungen eingearbeitet sind, die jeweils eine Breite haben, die der Dicke des Handlaufs entspricht und die kurz vor der oberen Deckfläche des Eckstückes enden, sich nach unten jedoch bis zum Ende des jeweiligen Eckstückes erstrecken, so daß die Enden von Handlaufabschnitten beliebiger, an der Baustelle durch Abschneiden gebildeter Neigung vertieft und die Schnitt-unsauberkeiten überdeckend aufgenommen sind und daß zwischen den Eckstücken und den Endflächen der Handlaufabschnitte Befestigungsmittel, wie Schrauben, Dübelverankerungen, Spannelemente oder dgl. vorgesehen sind.

Die Erfindung geht davon aus, daß bei einer schnellen Anpass- und Montagearbeit auch von durchschnittlichen Handwerkern oder Monteuren stets kleine Winkelungenauigkeiten auftreten und die Schnittkanten zum Teil kleinere oder größere Ausbrechungen aufweisen, insbesondere wenn die Handlaufabschnitte nicht aus sehr hochwertigen Harthölzern bestehen, und schafft ein sehr einfaches, vielfältig gestaltbares Eckstück, welches die Ungenauigkeit durch Überdeckung und Aufnahme in den taschenartigen Vertiefungen nicht mehr in Erscheinung treten läßt. Dabei ist jedoch nicht nur der einzige Gedanke einer Überdeckung, wie er sonst mit End- und Abdeck-Kappen in der Bautechnik allgemein realisiert ist, allein Bestandteil der für die spezielle Problemlösung gefundenen Maßnahme, sondern es wird darüber hinaus den unterschiedlich langen Stirnflächen dadurch Rechnung getragen, daß man nun nicht jeweils einzel passende Vertiefungsflächen an der Baustelle ausarbeitet oder eine Vielzahl von Eckstücken mit genau entsprechend angepaßten Vertiefungen bereitstellt, sondern daß man sich den Umstand zunutze macht, daß in der Regel nur von oben und außen auf das Geländer gesehen wird und man im geringen Abstand unterhalb des Handlaufabschnittes im Innern evtl. Unsauberkeiten kaum sehen kann und daß man deshalb eine nach unten offene Vertiefung oder Tasche vorsieht, die jedoch oben einen werkseitig sauber ausgearbeiteten Überdeckungsrand aufweist. So kann man Eckstücke mit einer Gesamtlänge, die der Masse der vorkommenden Fälle gerecht wird, in großer Stückzahl rationell herstellen und sie für Geländerabschnitte jeder beliebigen Neigung verwenden. Erscheint das Eckstück zu lang, so kann man es problemlos am unteren Ende sauber abschneiden und die Kanten ggf. etwas überschleifen. Dabei hat man zur Auffindung des neuen Lösungsweges erkannt, daß die Breite bei den unterschiedlichsten Anschlußwinkeln gleich bleibt und nur Neigung und Höhe der Anschlußfläche variiert und man also bei gleich breiten Vertiefungen seitlich stets saubere Überdeckungen erzielt, die auch noch zur Sicherung gegen Winkelverdrehungen beitragen können.

Die Erfingung ist an sich im wesentlichen für Massivholz-Handläufe und Eckstücke aus Massivholz vorgesehen. In Anbetracht dessen, daß der Verbrauch edlen Massivholzes eingeschränkt werden muß und daß gleichartige Abschneide- Überdeckungs- und Montageprobleme auch bei anderen Handläufen vorkommen, ist die Erfindung auch für Handläufe mit einem ggf. sogar profilierten Holzwerkstoffkern und einem Furnier oder auch für sonstige steife Halbzeug-Abschnitte geeignet. Bei Eckstücken aus Massivholz, die relativ preiswert verfügbar sind, weil man nur verhältnismäßig kleine Stücke benötigt, kann die Einbringung der Vertiefungen mit geeigneten Kopf- oder Fingerfräsern vorgenommen werden. Andererseits kann man jehoch auch Formteile aus Kunststoffen, insbesondere aber auch aus Metallen, vor allem aus Buntmetallen,verwenden, die sich leicht in die gewünschte Form bringen lassen. Dabei ist es zwar zweckmäßig, daß die Anschlußflächen mit den Vertiefungen in einem rechten Winkel zueinander stehen. Mann kann jedoch auch Eckstücke mit vom rechten Winkel abweichenden Anschlußflächen vorsehen. Insbesondere wird eine Verbindung von Eckstücken aus Messingguß oder Bronzeguß mit dunklen Naturhölzern oder Naturholzfurnieren eine ansprechende Lösung schaffen. Die durch die Vertiefung gegebenen Überdeckungen der Enden sind besonders auch für furnierte oder mit sonstigen Überzügen versehene gerade Handlaufabschnitte günstig, weil dann die zumeist dünnen Furniere oder Beschichtungen im Endbereich von außen übergriffen und damit festgelegt werden.

Eine vorteilhafte Ausgestaltung der Erfindung sieht vor, daß die Eckstücke als etwa quadratsäulenförmige Holzstücke ausgebildet sind, an denen zwei benachbarte, im rechten Winkel zueinander stehende Seitenflächen mit den Vertiefungen versehen sind, während die beiden außenliegenden Vertikalflächen eine Rundung mit größerem Radius zwischen sich aufweisen. Ein solches Eckstück kann leicht hergestellt werden und erfüllt die Bedürfnisse bei den meisten Geländern mit Holzhandläufen oder Handläufen aus Holzwerkstoffen und bietet dabei beim Begehen und Anfassen angenehme Griffverhältnisse und ein optisch ansprechendes Bild. Man kann die Vertiefungen mit gleichem Randabstand in die Seitenflächen des Eckstückes einarbeiten. Je nach Art des verwendeten Holzes muß man jedoch darauf achten, daß die Ecken bei der Montage, beim Gebrauch und beim Verdrehen des stets arbeitenden Holzes nicht ausbrechen und andererseits sollte der Überstand der Eckstücke über die Handläufe nicht zu groß sein, um beim Heraufund Heruntergleiten mit der Hand und beim Entlanggehen am Geländer keine unangenehmen Stoßwirkungen zu erzeugen. Deshalb kann es zweckmäßig sein, je nach Art des verwendeten Materials für die Eckstücke und/oder die Handlaufabschnitte, wenn die vertikal verlaufenden Randabschnitte neben den Vertiefungen unterschiedliche Breite aufweisen.

Die Verbindung zwischen Eckstücken und Handlaufabschnitten kann auf vielerlei Weise erfolgen. Wesentlichster Gesichtspunkt ist neben einem dauerhaft guten Halt schnelle und einfache Montage. Eine vorteilhafte Lösung sieht durch die Eckstücke in die Stirnseiten der Handlaufabschnitte eingeschraubte Schrauben vor. Diese können unter Abdeck-Kappen verdeckt sein. Wegen der seitlichen Führung der Handlaufabschnitte in den Vertiefungen reicht für jeden Handlaufabschnitt bei tiefgängigen Schrauben in der Regel eine einzige Schraube aus. Das Einbringen der Schraube und ihrer Bohrung muß jedoch an der Baustelle vorgenommen werden, weil dabei die Neigung des jeweiligen Handlaufabschnittes zu berücksichtigen ist. Außerdem stört vielfach Bohrung und Abdeck-Kappe, so daß eine besonders zweckmäßige Ausgestaltung der Erfindung vorsieht, daß an den vertikalen Endflächen der Handlaufabschnitte und den Auflageflächen der Eckstücke Eingriffselemente vorgesehen sind, welche beim Einstecken der Eckstücke von oben eine selbstspannende, formschlüssige Verbindung bilden. Dabei werden zweckmäßig die an den Eckstücken vorzusehenden Eingriffselementteile werkseitig vorgefertigt, während die an den Endflächen der Handlaufabschnitte vorzusehenden Eingriffselementeteile erst nach dem Abschneiden anzubringen sind. Deshalb kann es zweckmäßig sein, unterschiedlich ausgebildete Eingriffselementteile zu verwenden. Man kann dafür herkömmliche, in der Schreinerei bekannte Einhängeelemente, wie Haken, und in die Eckstückflächen eingelassene Halter mit Eingriffsöffnungen vorsehen. Dabei werden die Eingriffselemente zweckmäßig in wenigstens eine der zusammenzufügenden Flächen, vorzugsweise in die Anlageflächen der Eckstücke, eingelassen. Dann kommt man mit relativ wenig tief eingelassenen Vertiefungen aus. Das ist vor allem für Holz-Eckstücke zweckmäßig. Bei aus Metallen oder Kunststoffen als Formteile ausgebildeten Eckstücken kann man jedoch auch entsprechende Freiräume vorsehen oder die Handlaufabschnitte tief genug eingreifen lassen. Als Eingriffselemente eignen sich besonders einander hintergreifende Schienen, weil diese das Einschieben und Festkeilen besonders gut zulassen. Dabei können die Eingriffselemente mit in Einschubrichtung leichtgängigen, gegen die Ein-schubrichtung jedoch schwergängien Zähnen, Nop-pen oder dgl. ausgebildet sein, um so eine gute Sicherung der Eckstücke zu erzielen, andererseits die Montage nicht zu erschweren. Die Eingriffselemente können zweckmäßig mit rückseitigen Verzahnungen, Spitzen oder dgl. ausgestattet sein, so daß sie unverschwenkbar zu befestigen sind, auch wenn man sie vorzugsweise mit nur jeweils einer Schraube nach dem Abschneiden an der Handlauf-Endfläche befestigt. So wird die Montage vereinfacht und die Benutzungssicherheit jedoch nicht verringert. Die Eingriffselemente können an sich aus dem Werkstoff der Eckstücke und/oder der Handlaufabschnitte gebildet werden. Das ist jedoch nur bei ganz bestimmten Werkstoffen möglich. Deshalb können die Eingriffselemente zweckmäßig aus Metall bestehen. Dann kann man bei relativ kleinen Abmessungen relativ große Spann- und Haltekräfte übertragen. Um jedoch gewisse Elastizitäten für den Ausgleich von Toleranzen und zur Erreichung einer guten Klemmverbindung und zur Überwindung von Ausschub-Schutzmaßnahmen zu erzielen, kann es zweckmäßig sein, die Eingriffselemente aus Kunststoff-Formteilen zu schaffen. Dabei können die verschiedensten Profilierungen, die ein Einhängen und Einschieben gestatten, gewählt sein. Die Eingriffselementteile können in dem Eckstück in eine vorzugsweise mit Hinterschneidungen ausgebildete Vertiefung formschlüssig eingesetzt sein. So kann man die Eingriffselemente relativ elastisch ausbilden und dann die Wandungen der Hinterschneidungen zur Abstützung und stets dauerhaften Halterung auch bei Schwinden und Veränderungen des Holzes heranziehen. Für Anwendungsfälle, wo man nicht auf ein aus Holz bestehendes Eckstück Wert legt, sondern entweder geeignete Kunststoffe oder Metalle in Kauf nimmt oder sogar wünscht, können die Eckstücke Kunststoff-oder Metall-Formteile sein, in die die Vertiefungen für die Aufnahme der Endflächen der Handlaufabschnitte ausgebildet und in denen die Eingriffselementbestandteile des Eckstückes aufgrund der Formgebung gebildet sind.

Durch die vorstehenden beschriebenen Maßnahmen ist es nunmehr möglich, eine Schnellmontage von Handlaufabschnitten mit sauberem Eckanschluß zu ermöglichen. Diese ist besonders zweckmäßig für Schnellmontagegeländerstäbe, die auf der Treppenstufe stehend befestigt werden und einen Höhenausgleich ermöglichen. Diese tragen am oberen Ende ein Gelenkstück mit einem Anschlußflansch, der zweckmäßig mit wenigstens einer Schraube an der Unterseite des Handlaufes befestigt wird. Auch dafür hat man viele Lösungen versucht, die vielfach aufwendig und oft unbefriedigend sind. Vor allem muß man, wenn man den tatsächlichen Gegebenheiten am Bau Rechnung trägt, Vorkehrungen treffen, daß Nachrichtarbeiten möglich sind. Diese sind bei Verwendung von Schrauben außerordentlich schwierig, weil man das alte Schraubloch in der Regel sieht, wenn die Schraube nachträglich versetzt werden muß. Außerdem ist eine gute Führung und Zentrierung von der Unterseite her schwer zu erreichen. Deshalb sieht die Erfindung für die die vorstehend beschriebenen Handläufe mit Eckstücken, daß die Handlaufabschnitte unterseitig eine Längsnut aufweisen, in welche an beliebiger Stelle Schrauben der Flansche der Gelenkstücke der Handlaufstabenden einschraubbar sind. So ist die eigentliche Befestigungsbohrung verdeckt angebracht und man kann bequem Korrekturen unauffällig vornehmen. Die Nut wird als zum Bild des Handlaufs zugehörig angesehen. Die Nut kann vor allem weiter zur sauberen Führung des Gelenkstückes mit seinem Flansch dadurch herangezogen werden, daß man mit leichtem Preßsitz in die Nuten eingreifende, vorzugsweise längliche Nasen auf den oberen Flanschflächen der Gelenkstücke vorsieht. Man benötigt dann nur noch eine einzige Schraube und erzielt trotzdem eine gute Ausrichtung und einen sicheren Halt. Durch den Flansch mit dem schwergängigen Schiebesitz oder Klemm-Schiebesitz oder Preß-Schiebesitz ist ein leichte Vormontage möglich. Man kann die Geländerabschnitte dann aufstecken und ausrichten, die passenden Endabschneidungen vornehmen, um die Eckstücke einzusetzen, ohne daß Schrauben eingedreht sind. Trotzdem ist eine gute Verbindung zwischen allen Geländerstäben und Handlaufabschnitten gegeben und man kann die Schrauben erst eindrehen, wenn alles genau zusammenpaßt. Weitere Einzelheiten, Vorteile, Merkmale und Gesichtspunkte der Erfindung sind auch in dem nachfolgenden, anhand der Zeichnungen behandelten Beschreibungsteil enthalten.

Ausführungsbeispiele der Erfindung werden nachfolgend anhand der Zeichnungen erläutert.

Es zeigen:

Fig. 1 Eine schematisierte Schrägansicht eines Geländerteiles mit zwei Eckstükken;

Fig. 2 eine Explosionsschrägansicht eines Eckstückes mit zwei Handlaufabschnittenden;

Fig. 3 eine Seitenansicht auf ein Eckstück, welches an einem schräg aufragenden Handlaufabschnitt festgeschraubt ist, bei dem jedoch die in der Ansicht liegende Anschlußfläche noch frei ist;

Fig. 4 einen Horizontalschnitt durch ein Eckstück mit beiden angeschlossenen Handlaufabschnitten;

Fig. 5 einen Teilvertikalschnitt mitten durch ein Eckstück mit schematisiert dargestellten Eingriffselementen;

Fig. 6 einen Horizontalschnitt durch die Anordnung längs der Linie 6-6 in Fig. 5;

Fig. 7 einen Vertikalschnitt durch einen Handlaufteil mit Geländerstabanschluß;

Fig. 8 einen Schnitt längs der Linie 8-8 in Fig. 7.

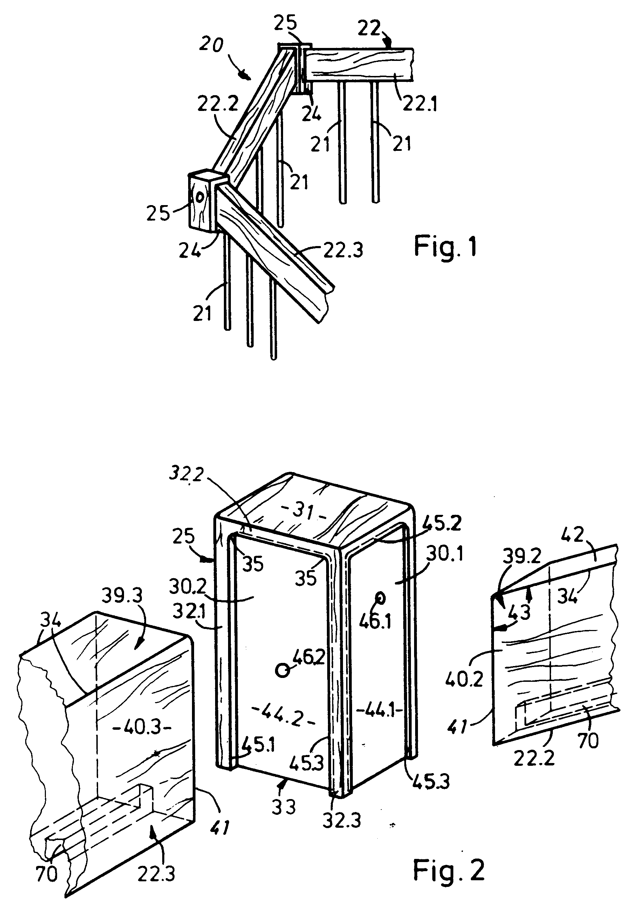

Das Geländer 20 nach Fig. 1 hat Geländerstäbe 21 und einen Handlauf 22 mit Handlaufabschnitten 22.1, 22.2 und 22.3, die aus geraden Massivholzstücken gebildet sind und die an die rechtwinklig zueinander stehenden Anschlußflächen 24 der Eckstücke 25 mit vertikalen Endflächen angeschlossen sind. Wie ersichtlich, kann man unter verschiedenen Winkeln und in verschiedenen Ebenen zueinander verlaufende gerade Handlaufabschnitte mit Eckstücken 25 zweckmäßig stabil miteinander verbinden. Der ganze Handlauf 22 kann dann freitragend auf den Geländerstäben 21 befestigt sein und es brauchen keine weiteren stabilen Verbindungen zur Treppe und/oder Wand hergestellt zu werden. Man kann solche Handläufe zweckmäßig für Schnellmontage-Geländerstäbe, die stehend auf Treppenstufen befestigt werden und geeignete Längeneinstell- ung Feststelleinrichtungen aufweisen, vorsehen. So erhält man ein komplettes Schnellmontagesystem für das Geländer, welches gerade steife Handlaufabschnitte vor allem auch in Massivholz so zu realisieren gestattet, daß eine Schnellmontage am Bau auch durch weniger gut ausgebildete Fachkräft sauber vorgenommen werden kann.

Die quadratsäulenförmigen Eckstücke 25 gehen aus den Fig. 2 bis 4 deutlich hervor. Zwei Außenflächen 26.1 und 26.2 stehen im rechten Winkel zueinander und haben zwischen sich eine stark gerundete Außenecke 27 mit dem Radius 28. Sie gehen mit gerundeten Ecken 29 in die Anschlußseitenflächen 26.3 und 26.4 über, wobei die Übergangsradien 36 wesentlich kleiner sind als der Radius 28 der Außenecke 27. Die obere Deckfläche 31 geht ebenfalls mit geeigneten, vorzugsweise nicht zu großen Rundungen in die Seitenflächen über. Das Eckstück 25 besteht aus Massivholz mit in Längsrichtung verlaufender Faser.

In die Anschlußseitenflächen 26.3 und 26.4 sind Vertiefungen 30.1 und 30.2 eingearbeitet, wie es gut aus Fig. 2 hervorgeht. Sie sind dreiseitig von den Randabschnitten 32.1, 32.2 und 32.3 umgeben. Die Randabschnitte 32.2, welcher der Deckfläche 31 benachbart liegen, begrenzen die Vertiefungen 30 nach oben derart, daß sie nicht bis zur Deckfläche 31 durchlaufen, sondern in geringem Abstand darunter enden. Am unteren Ende 33 des Eckstückes 25 sind die Vertiefungen 30 - wie aus Fig. 2 ersichtlich - offen bzw. durchlaufend ausgebildet. Die Breite B1 der Eckstücke beträgt beispielsweise 50 bis 55, vorzugsweise 53 mm, während die Breite B2 der Vertiefungen 30 geanu der Dicke D der Handlaufabschnitte 22 entspricht und beispielsweise 38 mm betragen kann. Die Handlaufabschnitte 22 sind an ihren oberen Kanten 34 mit einem Radius abgerundet, der dem Radius 35 der oberen Ecken der Vertiefungen 30 entspricht. Die Tiefe T der Vertiefungen 30, die auch als Taschen bezeichnet werden können, beträgt beispielsweise 2,5 mm. Sie kann jedoch auch tiefer gewählt werden. Die Breite B3 des oberen Randabschittes 32.2 beträgt beispielsweise 6,5 mm. Die Breite B4 des außenliegenden Randabschnittes 32.1 beträgt beispielsweise 5 bis 6 mm, während die Breite B5 des an der Innenecke liegenden Randabschnittes 32.3 beispielsweise 6 bis 10 mm betragen kann. So kann man unterschiedlich breite Randabschnitte vorsehen, um einerseits durch einen ausreichend breiten Randabschnitt die Abstützung des sich gegebenenfalls verdrehenden Handlaufstückes auf größerer Länge mit großer Stabilität zu sichern und andererseits an der Außenfläche, an der die Benutzer vorbeigleiten nur eine kleine Stufe zu haben, die auch nicht zum Ausbrechen neigt. der Handlaufabschnitte 22.2 und 22.3 Die Enden 39.2 und 39.3 haben Endflächen 40.2 und 40.3.

Diese werden auf der Baustelle, nachdem die Handlaufabschnitte auf den Geländerstäben 21 befestigt sind, nach entsprechendem Anreißen in der Senkrechten durch Absägen des Überstandes gebildet. Dabei gibt es an den Kanten 41 stets Schnittunsauberkeiten, die sich nach dem Werkstoff, dem verwendeten Trennwerkzeug und den Fähigkeiten des Monteurs richten. Vor allem werden aber je nach dem Winkel 43 zwischen der oberen Handlauffläche 42 und der senkrechten Endfläche 40 unterschiedlich lange Endflächen entstehen. Diesem trägt die Erfindung dadurch Rechnung, daß die Vertiefungen 30 zum Ende 33 hin offen sind, so daß man vorgefertigte Eckstücke mit einseitig geschlossenen Vertiefungen nach Abtrennen der Überstände auf die Endflächen 40 aufsetzt und einen zu großen Überstand des Eckstückes unten einfach absägen kann. Bei diesem ersten Ausführungsbeispiel stützen sich die senkrechten Endflächen 40.2 und 40.3 auf den Anlageflächen 44.1 und 44.2 der Vertiefungen 30.1 und 30.2 ab. Dabei treten Ungenauigkeiten im Winkel zur Seitenfläche oder zur Senkrechten, die unter dem Eintauchmaß liegen, nicht in Erscheinung. Die Montage und das Abschneiden der Handlaufabschnitte werden derart vorgenommen, daß zumindest die Kanten der oberen Wandflächen 45.2 der Vertiefungen 30 auf den oberen Handlaufflächen 42 beider Handlaufabschnitte zur Anlage kommen und somit hier saubere Abschlüsse bilden.

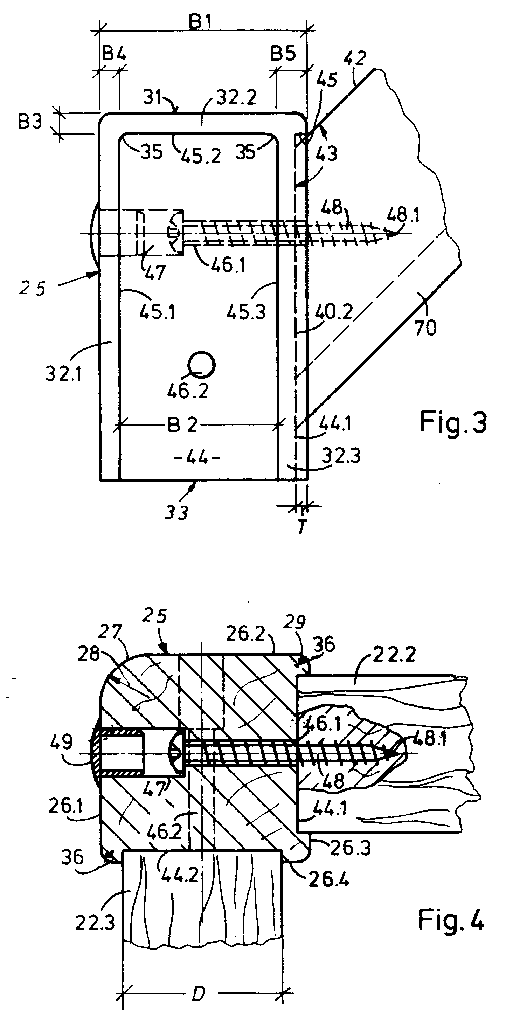

Bei diesem Ausführungsbeispiel sind zwei Durchgangsbohrungen 46.1 und 46.2 in unterschiedlicher Höhenlage - wie aus Fig. 3 ersichtlich - quer durch das Eckstück 25 geführt. Sie haben Kopferweiterungen 47. Ihre Höhenlage ist so gewählt, daß die durch sie durchgesteckte Schraube 48 mit ihrem Ende 48.1 in ausreichendem Abstand von der unteren oder oberen Handlauffläche des jeweils angeschlossenen Handlaufabschnittes endet, ohne daß Anfbrechungen erfolgen.

Die einzige Schraube je Handlaufabschnitt reicht deshalb aus, weil der jeweilige Handlaufabschnitt sich seitlich an den Seitenwänden 45.1 und 45.3 der Vertiefungen 30.1 und 30.2 abstützen kann und so Verdrehungen entgegengewirkt ist. Abdeck-Kappen 49 aus Kunststoff oder aus Holz sind geringfügig überstehend oder bündig in die Kopferweiterung 47 eingesetzt.

Die Bestandteile der Eckverbindung sind einfach und serienmäßig gut herzustellen, bieten ein ansprechendes, in Farbe und Holzart passendes Bild und lassen eine saubere Schnellmontage auf der Baustelle zu, wobei die Länge des Eckstückes 25 den jeweiligen Winkelverhältnissen angepaßt werden kann. Wenn man keinen rechtwinkligen Anschluß der Handlaufabschnitte wünscht, kann man auch Eckstücke verwenden, die nicht quadratprismenförmig sind, sondern unter vom rechten Winkel abweichenden Winkeln zueinander stehende Anlageflächen 44 aufweisen, wobei auch der Außenbereich ggf. z. T. zylinderförmig oder nach sonstigen Kurven gestaltet sein kann. Wenn man anstelle der Massivholz-Handläufe solche mit Furnieren oder Überzügen verwendet, so werden die Enden der dünnen Beschichtungen durch die Versenkung in den Vertiefungen 30 geschützt. Gleichartig ausgeführte Eckstücke, beispielsweise aus Messing oder Bronze, kommen für bestimmte Ausstattungswünsche in Betracht und können ebenfalls leicht gefertigt und angebracht werden.

In manchen Fällen erscheint dem Benutzer die Befestigung mit einer Durchgangsbohrung bezüglich des Aussehens unbefriedigend oder auch bezüglich der Stabilität problematisch, insbesondere dann, wenn die Kerne der Handlaufabschnitte nicht stabil genug sind, un einer einzigen Schraube genügend Halt zu bieten. Das Einbringen von Gewindebüchsen auf der Baustelle wäre sehr aufwendig.

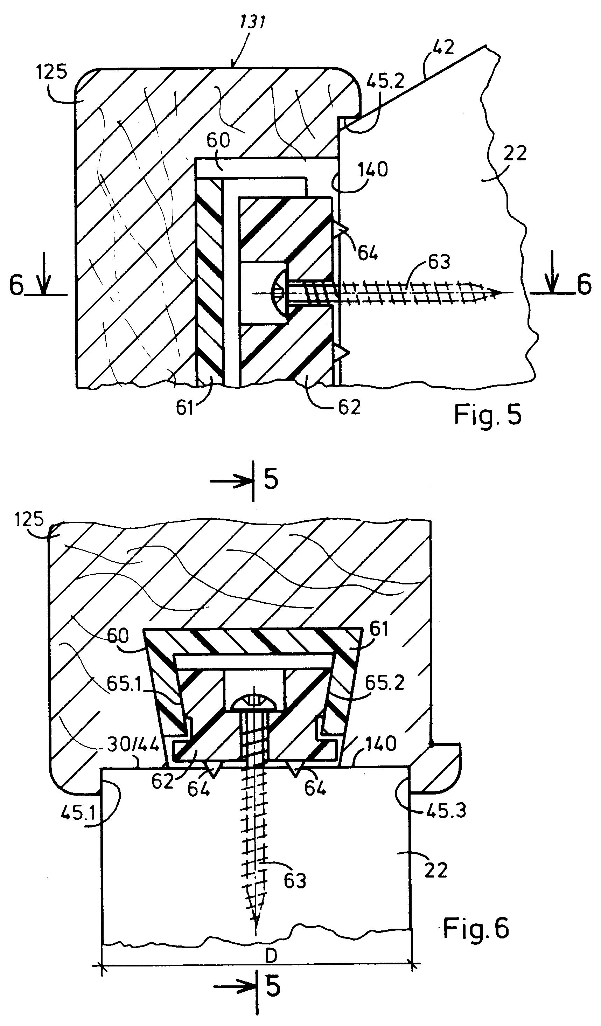

Das Ausführungsbeispiel nach den Fig. 5 und 6 zeigt schematisch eine Lösung für eine Eingriffselementeverbindung. Dabei ist in das Eckstück 125 eine nicht bis zur oberen Deckfläche 131 durchlaufende Schwalbenschwanznut 60 mit geringer Flankenneigung, jedoch großer Tiefe eingebracht. Eine Schwalbenschwanzschiene 61 aus Metall oder Kunststoff ist in die Schwalbenschwanznut 60 eingesetzt und kann in dieser beispielsweise mit Schrauben, durch Verklebung und/oder durch Außenprofilierung oder dgl. befestigt sein. Auf die senkrechte Endfläche 140 ist ein schienenförmiger Eingriffsklotz 62 mit Hilfe einer einzigen Schraube 63 aufgeschraubt. Er hat an seiner Unterseite Spitzen 64, die sich in das Hirnholz oder dgl. einsenken und ihn so verdrehfest sichern. Er ist mit entsprechenden Freiflächen gebildet und hat Anlage- und Klemmflächen 65.1 und 65.2, die entsprechend dem Schwalbenschwanzprofil geneigt sind, wobei die Neigung in Längsrichtung jedoch so gestaltet sein kann, daß eine gewisse Keilwirkung zusätzlich entsteht. Die Schwalbenschwanzschienen 61 sind nach unten offen, so daß nach dem passenden Abschneiden und Aufschrauben der Eingriffsklötze 62 das werkseitig vorgefertigte Eckstück 125 einfach von oben aufgesteckt und mit dem Hammer festgeschlagen wird. Geeignete Noppen, Zähne oder dgl. zwischen den beiden Eingriffsteilen können Lockerungen und ein unbeabsichtigtes Hochdrücken verhindern. Für die Eingriffselemente gibt es viele weitere Ausgestaltungsmöglichkeiten.

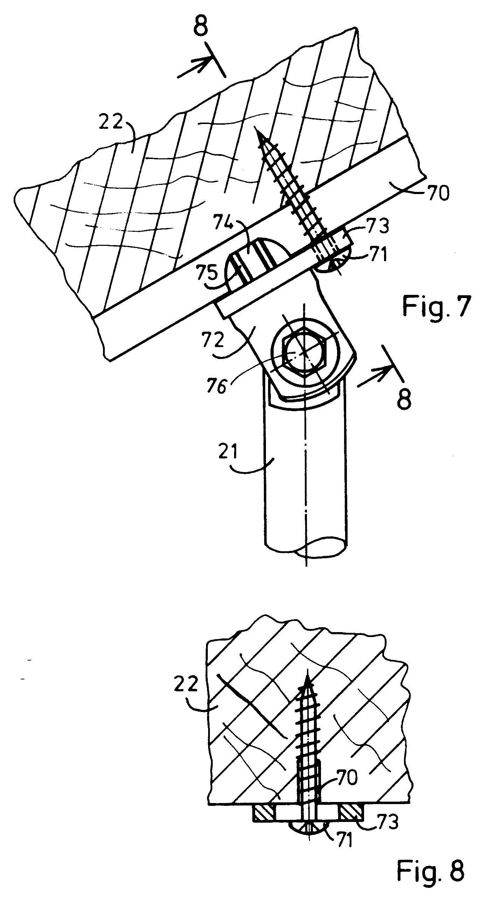

Die Fig. 7 und 8 veranschaulichen in weiteren Einzelheiten, daß die Handlaufabschnitte 22 in ihrer Unterseite eine Längsnut 70 mit einer geringen Breite von etwa 4 mm und eine Tiefe von etwa 8 mm aufweisen können. Diese dient dazu Befestigungsschrauben 71 von Gelenkstücken 72 aufzunehmen. Die Gelenkstücke 72 haben einen Flansch 73, durch den sich die Schraube 71 vorzugsweise durch ein quer verlaufendes Langloch erstreckt. Der Flansch 73 hat auf seiner Oberseite eine längliche Nase 74, die mit leichtem Festsitz in die Nut 70 paßt und beispielsweise noch Halterippen 75 aufweisen kann. An das Gelenkstück 72 greift über die Spannschraube 76 der Geländerstab 21 mit beliebiger Winkelneigung an. Da die Handlaufabschnitte genau paßend den Eckstücken zugeführt und angeschlossen werden müssen, kann es vorkommen, daß die Montage auf den Geländerstäben 21 zunächst nicht genau genug vorgenommen wurde, obwohl die Schrauben 71 eingeschraubt waren. Löst man nun die Schrauben 71 und verschiebt das Gelenkstück in der Nut 70, so kann man die Schraube problemlos an anderer Stelle selbst unmittelbar neben den alten Loch ggf. etwas schräg einschrauben, ohne daß die Montagekorrektur in Erscheinung tritt. Der Geländerstab und sein Gelenkteil sind durch die Nase besonders fest mit dem Handlaufabschnitt verbunden.

Zusammengefaßt kann die Erfindung auch wie folgt beschrieben werden:

Der Treppenhandlauf besteht aus geraden Handlaufabschnitten (22.2, 22.3), deren Endflächen (40.2, 40.3) senkrecht abgeschnitten sind. Zwischen ihnen sind Eckstücke (25) vorgesehen. Diese haben in ihren Anschlußseitenflächen Vertiefungen (30.1, 30.2) mit einer Breite, die der Dicke der Handlaufabschnitte entspricht. Die Vertiefungen reichen nicht bis zur oberen Deckfläche (31). Die Seitenwände (45) der Vertiefungen (30) überdekken die Enden der Handlaufabschnitte und verdekken so Ungenauigkeiten und Unsauberkeiten beim Abschneiden der Endflächen (40).

Bezugszeichenliste:

| | |
|---|---|
| 20 | Geländer |
| 21 | Geländerstab |
| 22 | Handlauf |
| 22.1 | Handlaufabschnitt |
| 22.2 | Handlaufabschnitt |
| 22.3 | Handlaufabschnitt |
| 24 | Anschlußfläche |
| 25 | Eckstück |
| 26.1 | Außenfläche |
| 26.2 | Außenfläche |
| 26.3 | Anschlußseitenfläche |
| 26.4 | Anschlußseitenfläche |
| 27 | Außenecke |
| 28 | Radius |
| 2 | 9 gerundete Ecke |
| 30 | Vertiefung |
| 30.1 | Vertiefung |
| 30.2 | Vertiefung |
| 31 | obere Deckfläche |
| 32 | Randabschnitt |
| 32.1 | Randabschnitt |
| 32.2 | Randabschnitt |
| 32.3 | Randabschnitt |
| 33 | unteres Ende von 25 |
| 34 | obere Kante von 22 |
| 35 | Radius |
| 36 | Radius |
| 39.2 | Ende |
| 39.3 | Ende |
| 40 | Endfläche |
| 40.2 | Endfläche |
| 40.3 | Endfläche |
| 41 | Kante |
| 42 | Handlauffläche |
| 43 | Winkel |
| 44 | Anlagefläche |
| 44.1 | Anlagefläche |
| 44.2 | Anlagefläche |
| 45.1 | Seitenwand |
| 45.2 | obere Wandfläche |
| 45.3 | Seitenwand |
| 46.1 | Durchgangsbohrung |
| 46.2 | Durchgangsbohrung |
| 47 | Kopferweiterung |
| 48 | Schraube |
| 48.1 | Ende von 48 |
| 49 | Abdeck-Kappe |
| 60 | Schwalbenschwanznut |
| 61 | Schwalbenschwanzschiene |
| 62 | Eingriffsklotz |
| 63 | Schraube |
| 64 | Spitze |
| 65.1 | Anlage- und Klemmfläche |
| 65.2 | Anlage- und Klemmfläche |
| 70 | Längsnut |
| 71 | Befestigungsschraube |
| 72 | Gelenkstück |
| 73 | Flansch |
| 74 | Nase |
| 75 | Halterippe |
| 76 | Spannschraube |
| 125 | Eckstück |
| 131 | obere Deckfläche |
| 140 | senkrechte Endfläche |
| D | Dicke von 22 |
| B1 | Breite von 25 |
| B2 | Breite von 30 |
| B3 | Breite |
| B4 | Breite |
| B5 | Breite |
| T | Tiefe von 30 |

**Patentansprüche**

1. Treppenhandlauf (22), der auf den oberen Enden von Geländerstäben (21) mit im Winkel einstellbaren Befestigungselementen (72) befestigt ist und in einzelne, mit unterschiedlicher Neigung und Winkellage verlaufende gerade Handlaufabschnitte (22.1, 22.2, 22.3) unterteilt ist und wobei die Enden (39.2, 39.3) jedes Handlaufabschnittes (22.2, 22.2, 22.3) vertikal verlaufende Endflächen (40.2, 40.3) aufweisen und im Bereich der jeweiligen vertikalen Endflächen mit Verbindungs- und Befestigungsmitteln befestigt sind, **dadurch gekennzeichnet,** daß die Verbindungsmittel in Stoßbereichen mit im Winkel zueinander stehenden, vertikal verlaufenden Auschlußseitenflächen (26.3, 26.4) versehene kurze Eckstücke (25), vorzugsweise aus Massivholz mit senkrecht laufender Faser, enthalten, welche etwas breiter (B1) als die Dicke (D) des Handlaufs (22) sind und eine Höhe aufweisen, die wenig höher als die längste Endfläche (40.2) des steilsten der beiden angeschlossenen Handlaufabschnitte (22.2, 22.3) ist und wobei in die zwei im Winkel zueinander stehenden Anschlußseitenflächen (26.3, 26.4) der Eckstücke (25) Vertiefungen (30.1, 30.2) eingearbeitet sind, die jeweils eine Breite (B2) haben, die der Dicke (D) des Handlaufs (22) entspricht und die kurz (32.2, 45.2) vor der oberen Deckfläche (31) des Eckstückes (25) enden, sich nach unten jedoch bis zum Ende (33) des jeweiligen Eckstückes (25) erstrecken, so daß die Enden (39.2, 39.3) von Handlaufabschnitten (22.1, 22.2, 22.3) beliebiger, an der Baustelle durch Abschneiden gebildeter Neigung (43) vertieft und die Schnittunsauberkeiten überdeckend aufgenommen sind und daß zwischen den Eckstücken (25) und den Endflächen (40) der Handlaufabschnitte (22.1, 22.2, 22.3) Befestigungsmittel, wie Schrauben (48), Dübelverankerungen, Spannelemente (61, 62) oder dgl. vorgesehen sind.

2.   Treppenhandlauf nach Anspruch 1, **dadurch gekennzeichnet,** daß die Eckstücke (25) als etwa quadratsäulenförmige Holzstücke ausgebildet sind, an denen zwei benachbarte, im rechten Winkel zueinander stehende Anschlußseitenflächen (26.3, 26.4) mit den Vertiefungen (30.1, 30.2) versehen sind, während die beiden außenliegenden Außenflächen (26.1, 26.2) eine Außenecke (27) in Form einer Rundung mit großem Radius (28) zwischen sich aufweisen.

3.   Treppenhandlauf nach Anspruch 1 oder 2, **dadurch gekennzeichnet,** daß neben den Vertiefungen (30.1, 30.2) vertikal verlaufende Randabschnitte (32.1, 32.3) gebildet sind, welche unterschiedliche Breiten (B4, B5) aufweisen.

4.   Treppenhandlauf nach einem der übrigen Ansprüche, **dadurch gekennzeichnet,** daß sich durch die Eckstücke (25) in die mit den Endflächen (40.2, 40.3) gebildeten Stirnseiten der Handlaufabschnitte (22.1, 22.2, 22.3) eingeschraubte Schrauben (48) erstrecken, die vorzugsweise unter Abdeck-Kappen (49) verdeckt sind.

5.   Treppenhandlauf nach wenigstens einem der Ansprüche 1 bis 3, **dadurch gekennzeichnet,** daß an den Anschlußseitenflächen (26.3, 26.4) bzw. den Anlageflächen (44.1, 44.2) und den Endflächen (40.2, 40.3) Eingriffselemente (61, 62) vorgesehen sind, welche beim Einstecken der Eckstücke (125) von oben eine selbstspannende formschlüssige Verbindung bilden.

6.   Treppenhandlauf nach Anspruch 5, **dadurch gekennzeichnet,** daß die Eingriffselemente (61, 62) in die Endflächen und/oder die Anlageflächen (44) wenigstens teilweise eingelassen sind.

7.   Treppenhandlauf nach Anspruch 5 oder 6, **dadurch gekennzeichnet,** daß die Eingriffselemente (61, 62) als einander hinterschneidende Schienen (61, 62) ausgebildet sind.

8.   Treppenhandlauf nach wenigstens einem der Ansprüche 5 bis 7, **dadurch gekennzeichnet,** daß die Eingriffselemente (61, 62) mit in Einschubrichtung leichtgängigen, gegen die Einschubrichtung jedoch schwergängigen Zähnen, Noppen oder dgl. ausgebildet sind.

9.   Treppenhandlauf nach wenigstens einem der Ansprüche 5 bis 8, **dadurch gekennzeichnet,** daß die Eingriffselemente (61, 62) mit rückseitigen Verzahnungen, Spitzen (64) oder dgl. ausgestattet sind und mit jeweils vorzugsweise nur einer Schraube (63) nach dem Abschneiden an den Endflächen (40) der Handlaufabschnitte (22.1, 22.2, 22.3) befestigt sind.

10.   Treppenhandlauf nach wenigstens einem der Ansprüche 5 bis 9, **dadurch gekennzeichnet,** daß die Eingriffselemente (61, 62) aus Metall bestehen.

11.   Treppenhandlauf nach wenigstens einem der Ansprüche 5 bis 9,

**dadurch gekennzeichnet,**

daß die Eingriffselemente (61, 62) aus Kunststoff-Formteilen bestehen.

12. Treppenhandlauf nach wenigstens einem der Ansprüche 5 bis 11
    **dadurch gekennzeichnet,**
    daß die Eingriffselemente (61) in dem Eckstück (125) in eine vorzugsweise mit Hinterschneidungen ausgebildete Vertiefung (60) formschlüssig eingesetzt sind.

13. Treppenhandlauf nach wenigstens einem der übrigen Ansprüche,
    **dadurch gekennzeichnet,**
    daß die Eckstücke (25, 125) als Kunstsoff- oder Metall-Formteile mit den Vertiefungen (30, 60) und den Eingriffselementebestandteilen (61) ausgebildet sind.

14. Treppenhandlauf, nach wenigstens einem der vorstehenden Ansprüche,
    **dadurch gekennzeichnet,**
    daß die Handlaufabschnitte (22.1, 22.2, 22.3) unterseitig eine Längsnut (70) aufweisen, in welcher an beliebiger Stelle Befestigungsschrauben (71) der Flansche (73) von Gelenkstücken (72) der Geländerstäbe (21) einschraubbar sind.

15. Treppenhandlauf nach Anspruch 14,
    **dadurch gekennzeichnet,**
    daß die Flansche (73) der Gelenkstücke (72) für die Geländerstäbe (21) mit Preß-Schiebesitz in die Nuten (70) eingreifende, vorzugsweise längliche Nasen (74) aufweisen.

## Claims

1. A staircase handrail (22) which is fixed with angle-adjustable fixing elements (72) on the upper ends of balusters (21) and which is divided into individual straight handrail sections (22. 1, 22. 2, 22. 3) which extend at a varying slope and angle position, and wherein the ends (39. 2, 39. 3) of each handrail section (22. 1, 22. 2, 22. 3) have vertical end faces (40. 2, 40. 3) and are fixed in the region of the respective vertical end faces with joining and fixing means, CHARACTERISED IN THAT the joining means comprise, in abutment regions, short corner pieces (25) provided with vertical side faces (26. 3, 26. 4) for attachment which are at an angle to each other, which corner pieces are preferably made of solid wood with vertical grain and are slightly broader (B1) than the thickness (D) of the handrail (22) and are of a height a little higher than the longest end face (40. 2) of the steepest of the two attached handrail sections (22. 2, 22. 3), and wherein recesses (30. 1, 30. 2) are worked into the two attachment side faces (26. 3, 26. 4) - at an angle to each other - of the corner pieces (25), which recesses each have a breadth (B2) which is the same as the thickness (D) of the handrail (22) and end just (32. 2, 45. 2) before the upper covering face (31) of the corner piece (25) but extend downwards as far as the end (33) of the respective corner piece (25), with the result that the ends (39. 2, 39. 3) of handrail sections (22. 1, 22. 2, 22. 3) of any desired slope (43), which is formed on site by cutting off, are received in inset manner, and the cutting imperfections are overlapped, and in that fixing means, such as screws (48), dowel anchoring means, clamping elements (61, 62) or the like are provided between the corner pieces (25) and the end faces (40) of the handrail sections (22. 1, 22. 2, 22. 3).

2. A staircase handrail according to Claim 1, characterised in that the corner pieces (25) are in the form of approximately square-column-shaped pieces of wood on which two neighbouring attachment side faces (26. 3, 26. 4) - at right angles to each other - with the recesses (30. 1, 30. 2) are provided, while the two outer faces (26. 1, 26. 2) on the outside have between each other an outer corner (27) in the form of a curvature with a large radius (28).

3. A staircase handrail according to Claim 1 or 2, characterised in that vertical edge sections (32. 1, 32. 3) are formed beside the recesses (30. 1, 30. 2), which edge sections have different breadths (B4, B5).

4. A staircase handrail according to any one of the other claims, characterised in that screwed-in screws (48) extend through the corner pieces (25) into the front faces - formed by the end faces (40. 2, 40. 3) - of the handrail sections (22. 1, 22. 2, 22. 3), which screws are preferably hidden under covering caps (49).

5. A staircase handrail according to at least one of Claims 1 to 3, characterised in that engagement elements (61, 62) are provided on the attachment side faces (26. 3, 26. 4) or the contact faces (44. 1, 44. 2) respectively and the end faces (40. 2, 40. 3), which engagement elements form a self-clamping positive-locking connection when the corner pieces (125) are inserted from above.

6. A staircase handrail according to Claim 5, characterised in that the engagement elements (61, 62) are, at least partly, embedded in the end faces and/or the contact faces (44).

7. A staircase handrail according to Claim 5 or 6, characterised in that the engagement elements (61, 62) are in the form of rails (61, 62) which undercut one another.

8. A staircase handrail according to at least one of Claims 5 to 7, characterised in that the engagement elements (61, 62) are formed with teeth, nubs or the like which move easily in the insertion direction but with difficulty in the opposite direction thereto.

9. A staircase handrail according to at least one of Claims 5 to 8, characterised in that the engagement elements (61, 62) are equipped at the back with toothing, points (64) or the like and are each fixed with preferably only one screw (63) to the end faces (40) of the handrail sections (22. 1, 22. 2, 22. 3) after the cutting-off.

10. A staircase handrail according to at least one of Claims 5 to 9, characterised in that the engagement elements (61, 62) are made of metal.

11. A staircase handrail according to at least one of Claims 5 to 9, characterised in that the engagement elements (61, 62) consist of plastics-material shaped parts.

12. A staircase handrail according to at least one of Claims 5 to 11, characterised in that the engagement elements (61) in the corner piece (125) are inserted in a positive-locking way in a recess (60) preferably formed with undercuts.

13. A staircase handrail according to at least one of the other claims, characterised in that the corner pieces (25, 125) are in the form of plastics-material or metal shaped parts with the recesses (30, 60) and the engagement element components (61).

14. A staircase handrail according to at least one of the preceding claims, characterised in that the handrail sections (22. 1, 22. 2, 22. 3) have on the underside a longitudinal groove (70) in which fixing screws (71) for the flanges (73) of hinge pieces (72) of the balusters (21) can be screwed in at any desired place.

15. A staircase handrail according to Claim 14, characterised in that the flanges (73) of the hinge pieces (72) for the balusters (21) have preferably oblong lugs (74) engaging with press-sliding fit in the grooves (70).

## Revendications

1. Main courante pour escalier (22), fixée aux extrémités supérieures de potelets (21) à l'aide d'éléments de fixation (72) à position angulaire réglable et subdivisée en différentes sections rectilignes de main courante (22.1, 22.2, 22.3), d'inclinaison et de position angulaire variables, les extrémités (39.2, 39.3) de chaque section de main courante (22.1, 22.2, 22.3) présentant des surfaces verticales d'extrémité (40.2, 40.3) et étant fixées au niveau de ces surfaces verticales d'extrémité par des éléments de liaison et de fixation, caractérisée en ce que les éléments de liaison possèdent au niveau des joints des pièces d'angle (25) courtes, de préférence en bois massif avec fibres orientées verticalement, avec des surfaces latérales de raccordement (26.3, 26.4) orientées verticalement et formant entre elles un angle, d'une largeur (B1) légèrement supérieure à l'épaisseur (D) de la main courante (22) et d'une hauteur un peu supérieure à la surface d'extrémité (40.2) la plus longue de la section de main courante raccordée la plus pentue des deux (22.2, 22.3), les deux surfaces latérales de raccordement (26.3, 26.4) formant entre elles un angle présentant des décrochements (30.1, 30.2) ayant une largeur (B2) correspondant à l'épaisseur (D) de la main courante (22) et se terminant juste avant (32.2, 45.3) la face supérieure (31) de la pièce d'angle (25) mais se poursuivant vers le bas jusqu'au bout (33), si bien que les extrémités (39.2, 39.3) de sections de main courante (22.1, 22.2, 22.3) d'inclinaison (43) quelconque, obtenue par découpe sur le chantier, sont insérées dans le décrochement, qui dissimule en les recouvrant les défauts de la coupe et que, entre les pièces d'angle (25) et les surfaces d'extrémité (40) des sections de main courante (22.1, 22.2, 22.3), sont disposés des éléments de fixation tels que des vis (48), des chevilles, des ancrages (61, 62) ou similaires.

2. Main courante pour escalier selon la revendication 1, caractérisée en ce que les pièces d'angle (25) sont des pièces de bois en forme de colonne de section quadratique, où deux surfaces latérales de raccordement (26.3, 26.4) adjacentes formant entre elles un angle droit portent des décrochements (30.1, 30.2), tandis que les deux autres surfaces verticales opposées (26.1, 26.2) présentent entre elles un angle extérieur (27) avec un arrondi à fort rayon (28).

3. Main courante pour escalier selon la revendication 1 ou 2, caractérisée en ce que les décrochements (30.1) et (30.2) sont jouxtés par des marges orientées verticalement (32.1, 32.2) présentant des largeurs (B4, B5) différentes.

4. Main courante pour escalier selon l'une des autres revendications, caractérisée en ce que l'on introduit au travers des pièces d'angle (25), dans les bouts des sections de main courante (22.1, 22.2, 22.3) formés par les surfaces d'extrémité (40.2, 40.3) des vis (48) qui sont de préférence dissimulées sous des chapeaux (49).

5. Main courante pour escalier selon au moins une des revendications 1 à 3, caractérisée en ce qu'il est prévu sur les surfaces latérales de raccordement (26.3, 26.4) ou sur les surfaces d'appui (44.1, 44.2) et sur les surfaces d'extrémité (40.2, 40.3) des éléments conjugués de fixation (61, 62) qui, lors de l'insertion par le haut des pièces d'angle (125), forment une liaison par obstacle se bloquant automatiquement.

6. Main courante pour escalier selon la revendication 5, caractérisée en ce que les éléments conjugués de fixation (61, 62) sont au moins partiellement noyés dans les surfaces d'extrémité (40) et/ou les surfaces d'appui (44).

7. Main courante pour escalier selon la revendication 5 ou 6, caractérisée en ce que les éléments conjugués de fixation (61, 62) ont la forme de rails (61, 62) avec dépouilles.

8. Main courante pour escalier selon au moins une des revendications 5 à 7, caractérisée en ce que les éléments conjugués de fixation (61, 62) sont formés avec des dents, des bossages ou similaires qui passent facilement dans la direction d'insertion mais bloquent dans la direction opposée.

9. Main courante pour escalier selon au moins une des revendications 5 à 8, caractérisée en ce que les éléments conjugués de fixation (61, 62) sont équipés de dents, de pointes (64) ou similaires sur leurs faces arrière et, après la découpe, sont fixés, chacun à l'aide d'une seule vis (63) de préférence, sur les surfaces d'extrémité (40) des sections de main courante (22.1, 22.2, 22.3).

10. Main courante pour escalier selon au moins une des revendications 5 à 9, caractérisée en ce que les éléments conjugués de fixation (61, 62) sont en métal.

11. Main courante pour escalier selon au moins une des revendications 5 à 9, caractérisée en ce que les éléments conjugués de fixation (61, 62) sont des pièces de forme en matière plastique.

12. Main courante pour escalier selon au moins une des revendications 5 à 11, caractérisée en ce que les éléments conjugués de fixation (61, 62) sont noyés en formant une liaison par obstacle dans la pièce d'angle (125) dans un décrochement (60) présentant de préférence des dépouilles.

13. Main courante pour escalier selon au moins une des autres revendications, caractérisée en ce que les pièces d'angle (25, 125) sont des pièces de forme en métal ou en matière plastique présentant les décrochements (30, 60) ainsi que des éléments conjugués de fixation (61).

14. Main courante pour escalier selon au moins une des revendications précédentes, caractérisée en ce que les sections de main courante (22.1, 22.2, 22.3) présentent sur leur face inférieure une rainure longitudinale (70) dans laquelle, à des endroits quelconques, peuvent être vissées des vis de fixation (71) des brides (73) de pièces articulées (72) des potelets (21).

15. Main courante pour escalier selon la revendication 14, caractérisée en ce que les brides (73) des pièces articulées (72) des potelets (21) possèdent des saillies (74), de préférence de forme allongée, qui s'insèrent en forçant un peu dans les rainures (70).

Fig. 1

Fig. 2

Fig. 3

Fig. 4

Fig. 5

Fig. 6

8

22

74

75

73

71

70

Fig. 7

72

76

8

21

22

70

73

71

Fig. 8